# EUROPÄISCHE PATENTSCHRIFT

(11) **EP 0 873 813 B1**
(45) Veröffentlichungstag und Bekanntmachung des Hinweises auf die Patenterteilung: **15.09.2004**
(21) Anmeldenummer: 98104265.8
(22) Anmeldetag: 09.03.1998
(51) Int. Cl.: B23K 26/02

(54) **Laserschneidmaschine und Verfahren zum Laserschneiden**
Laser cutting machine and process for laser cutting
Machine à couper au laser et procédé de coupage au laser

(30) Priorität: 21.04.1997 DE 19716616
(43) Veröffentlichungstag der Anmeldung: 28.10.1998
(73) Patentinhaber: Trumpf GmbH & Co, D-71254 Ditzingen (DE)
(72) Erfinder: Horn, Armin Dr. Ing., 71272 Renningen (DE)
(74) Vertreter: KOHLER SCHMID + PARTNER

(56) Entgegenhaltungen:
- DE-A- 2 630 795
- DE-C- 4 340 395

## Beschreibung

Die Erfindung betrifft eine Laserschneidmaschine zum Schneiden elektrisch leitender Werkstücke gemäß dem Oberbegriff des Anspruchs 1.

Die Erfindung betrifft weiterhin ein Verfahren zum Laserschneiden elektrisch leitender Werkstücke gemäß dem Oberbegriff des Anspruchs 2.

Automatisierte Laserschneidmaschinen sowie Verfahren zum Laserschneiden sind zur Durchführung einer Vielzahl von Bearbeitungsmaßnahmen gebräuchlich. Insbesondere beim Schneiden verhältnismäßig dicker Werkstücke aus nichtrostenden Stählen und dabei vor allem bei Schnittführung im Bereich von Werkstückecken können sich Schwierigkeiten bei der Gewährleistung der gewünschten Schnittqualität ergeben. So ist unter den beschriebenen Umständen gelegentlich zu beobachten, daß der Laser-Schneidstrahl die erforderliche Schnittiefe nicht beibehalten kann und dementsprechend mehrfach und/oder mit geänderten Schneidparametern an der betreffenden Schnittlinie entlanggeführt werden muß, bis er das Werkstück durchtrennt.

Eine Laserschneidmaschine sowie ein Verfahren zum Laserschneiden der eingangs angegebenen Gattung sind in DE-C-43 40 395 beschrieben. Im Falle des Standes der Technik wird ein mittels einer Meßkapazität gewonnenes Signal einer Auswerteeinrichtung zugeführt. Ein erster Teil dieser Auswerteeinrichtung dient dazu, aus dem empfangenen Signal ein Signal zu erzeugen zur Einstellung des Abstandes der Laserbearbeitungsdüse von dem zu bearbeitenden Werkstück. Parallel dazu wird das mittels der Meßkapazität generierte Signal in einem zweiten Teil der Auswerteeinrichtung zu einem Zustandssignal verarbeitet, welches von dem elektrischen Widerstand des an der Laserbearbeitungsstelle gebildeten Plasmas abhängig ist. Das genannte Zustandssignal bildet dann die Grundlage für die Maschinensteuerung.

Den Stand der Technik dahingehend weiterzubilden, daß eine Fehlsteuerung der Laserschneidmaschine bzw. ein fehlerhafter Ablauf des Verfahrens zum Laserschneiden vermieden wird, ist Aufgabe der vorliegenden Erfindung.

Vorrichtungsbezogen wird diese Aufgabe erfindungsgemäß durch eine Laserschneidmaschine gelöst, wie sie in Anspruch 1 beschrieben ist.

Dabei wird die Erkenntnis genutzt, daß die Größe des elektrischen Widerstandes des Mediums zwischen dem Laserschneidkopf und dem Werkstück einen Rückschluß auf die an der Schneidstelle erzielte Schnittqualität zuläßt. So hat es sich gezeigt, daß der genannte elektrische Widerstand bei regulärem Schneidbetrieb, wenn der Laserstrahl das Werkstück problemlos durchdringt, verhältnismäßig große Werte annimmt. Schwierigkeiten bei der Werkstückbearbeitung, insbesondere Probleme hinsichtlich der Beibehaltung der erforderlichen Schnittiefe des Laserstrahls, sind begleitet von einer Verminderung des elektrischen Widerstandes gegenüber den bei regulärem Schneidbetrieb gemessenen Werten. Dementsprechend kann die Widerstandsmessung als vergleichende Messung durchgeführt werden. Ausgangspunkt bildet dabei der empirisch ermittelte Widerstandswert bei regulärem Schneidbetrieb mit optimalem Schneidergebnis. Wird mittels der erfindungsgemäßen Widerstandsmeßeinrichtung ein Abfall der ermittelten Widerstandswerte festgestellt und überschreitet die Änderung der Widerstandswerte ein vorgegebenes Maß, so indiziert dies an sich die Notwendigkeit einer Beeinflussung der Parameter des Schneidvorgangs, um auf diesem Wege für Bearbeitungsverhältnisse zu sorgen, die eine optimale Schneidbearbeitung des Werkstücks zulassen. Neben dem Meßergebnis der Widerstandsmeßeinrichtung berücksichtigt die erfindungsgemäße Auswerteeinrichtung aber auch den zwischen dem Laserschneidkopf, insbesondere der Laserdüse, und dem Werkstück zum Zeitpunkt der Widerstandsmessung bestehenden Abstand. Dieser Abstand wird mittels der in Anspruch 1 genannten Abstandsmeßeinrichtung bestimmt. Dadurch eröffnet wird die Möglichkeit zur Überprüfung, ob beispielsweise ein mittels der Widerstandsmeßeinrichtung gemessener niedriger elektrischer Widerstandswert tatsächlich als Hinweis auf eine verminderte Schnittqualität anzusehen ist, oder ob dieser Widerstandswert darauf beruht, daß der Laserschneidkopf versehentlich an dem Werkstück zur Anlage gekommen und dadurch ein Kurzschluß erzeugt worden ist, infolge dessen der gemessene Widerstand einen niedrigen Wert annimmt. Eine zur Vergrößerung der gemessenen Widerstandswerte führende Steuerung der Parameter des Schneidvorgangs wird lediglich in dem erstgenannten Fall veranlaßt, in welchem der für das Medium zwischen Laserschneidkopf und Werkstück gemessene elektrische Widerstand einen niedrigen Wert besitzt und der Abstand zwischen Laserschneidkopf und Werkstück von Null verschieden ist. Auf diese Art und Weise wird eine Fehlsteuerung der Maschine ausgeschlossen. Nach Messung verhältnismäßig niedriger Widerstandswerte kann über die mit der Widerstandsmeßeinrichtung zusammenwirkende Einrichtung zur Steuerung der Parameter des Schneidvorgangs beispielsweise die Schneidgeschwindigkeit, sprich: die Vorschubgeschwindigkeit des Laserschneidkopfs relativ zu dem Werkstück, herabgesetzt werden. Alternativ oder ergänzend bietet sich unter anderem auch eine Variierung von Düsenabstand, Schneidgasdruck, Schneidgasmenge und/oder Laserstrahlleistung an. Umgekehrt signalisiert ein Anstieg der Größe des elektrischen Widerstandes des Mediums zwischen Laserschneidkopf und Werkstück von verhältnismäßig niedrigen Werten auf dem regulären Schneidbetrieb zuzuordnende Werte, daß der Laserstrahl das Werkstück funktionsgemäß durchdringt und daß beispielsweise die Vorschubgeschwindigkeit des Laserschneidkopfs und/oder die Laserstrahlleistung gegenüber den momentanen Verhältnissen wieder erhöht werden kann. Der Umfang der Änderung des bzw. der betreffenden Parameter des Schneidvorgangs ist dabei abhängig von dem Ausmaß der festgestellten Abweichung des momentanen Widerstandswertes von dem Widerstandswert bei regulärem Schneidbetrieb.

Verfahrensbezogen wird die vorstehend angegebene Aufgabe gemäß Anspruch 2 gelöst. Wird für das Medium zwischen Laserschneidkopf und Werkstück ein elektrischer Widerstand gemessen, der seiner Größe nach dem elektrischen Widerstand bei regulärem Schneidbetrieb mit optimalem Schneidergebnis entspricht, so können die eingestellten Parameter des Schneidvorgangs unverändert bleiben. Kommt es zu einer Änderung des gemessenen Widerstandswertes und ist der gemessene Abstand zwischen Laserschneidkopf und Werkstück von Null verschieden, so werden die Parameter des Schneidvorgangs anspruchsgemäß und in Abhängigkeit von dem Umfang der Widerstandsänderung variiert.

In bevorzugter Ausgestaltung des erfindungsgemäßen Verfahrens wird bei der Steuerung der Parameter des Schneidvorgangs Gruppen ermittelter Größen des elektrischen Widerstandes jeweils ein Betrag des betreffenden Parameters zugeordnet. So wird beispielsweise bei unterschiedlich großen aber innerhalb einer vorgegebenen Bandbreite liegenden elektrischen Widerständen des Mediums zwischen Laserschneidkopf und Werkstück der Betrag der Relativgeschwindigkeit von Laserschneidkopf und Werkstück auf ein und denselben Wert eingestellt.

Nachfolgend wird die Erfindung anhand einer schematischen Darstellung eines Ausführungsbeispiels der erfindungsgemäßen Maschine näher erläutert.

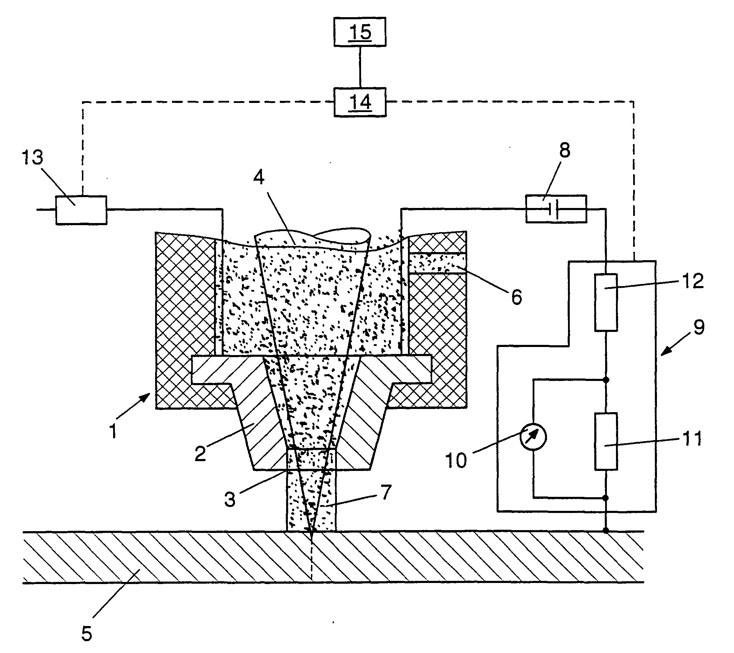

Die Abbildung zeigt einen Laserschneidkopf 1 mit einer aus einem elektrisch leitenden Werkstoff gefertigten Laserdüse 2, die gegenüber weiteren Teilen des Laserschneidkopfs 1 elektrisch isoliert angebracht ist. An einer Düsenmündung 3 tritt aus dem Laserschneidkopf 1 ein Laserstrahl 4 aus, der dem Laserschneidkopf 1 gegenüberliegend auf ein Werkstück 5 in Form eines elektrisch leitenden Edelstahlblechs trifft, um dieses, wie gestrichelt angedeutet, unter schneidender Bearbeitung zu durchdringen. Über eine Gaszuführung 6 wird Schneidgas, im dargestellten Beispielsfall Stickstoff, in den Laserschneidkopf 1 aufgegeben. Ein Schneidgasstrahl 7 tritt ebenfalls über die Düsenmündung 3 aus dem Inneren des Laserschneidkopfs 1 in Richtung auf das Werkstück 5 aus. Während der schneidenden Bearbeitung wird das Werkstück 5 ortsfest gehalten, der Laserschneidkopf 1 relativ zu dem Werkstück 5 von diesem beabstandet und parallel zu diesem verschoben.

Eine Spannungsquelle 8 ist einerseits mit der Laserdüse 2 und andererseits mit dem Werkstück 5 leitend verbunden. Dabei ist zwischen die Spannungsquelle 8 und das Werkstück 5 eine Widerstandsmeßeinrichtung 9 eingeschaltet, welche neben einem Meßgerät 10 einen dazu parallelgeschalteten Widerstand 11 sowie einen Vorwiderstand 12 umfaßt. Im weiteren Sinne sind auch die Laserdüse 2, die Spannungsquelle 8 und das Werkstück 5 Bestandteile der Widerstandsmeßeinrichtung 9. Eine kapazitive Abstandsmeßeinrichtung 13 bekannter Art zur Bestimmung des Abstandes des Laserschneidkopfs 1 von dem Werkstück 5 macht ebenfalls von der Laserdüse 2 Gebrauch.

Wie in der Abbildung gestrichelt angedeutet, stehen sowohl die Widerstandsmeßeinrichtung 9 als auch die kapazitive Abstandsmeßeinrichtung 13 mit einer rechnergestützten Auswerteeinrichtung 14 in Verbindung. Diese wiederum ist mit einer Einrichtung 15 zur Steuerung der Parameter des Schneidvorgangs, sprich: mit der Maschinensteuerung, gekoppelt.

Bei Schneidbetrieb der Maschine wird über die Widerstandsmeßeinrichtung 9 fortlaufend der elektrische Widerstand des Mediums zwischen der Laserdüse 2 und dem Werkstück 5 bestimmt. Bei regulären Schneidbedingungen, unter denen mittels des Laserstrahls 4 in dem Werkstück 5 ein Trennschnitt mit der gewünschten Qualität hergestellt wird, nimmt der gemessene Widerstand einen in etwa konstanten und gegen unendlich gehenden Wert an. Kommt es im Bereich der Schneidstelle beispielsweise bei Kurvenfahrt des Laserschneidkopfs 1 mit starker Kurvenkrümmung bei gegebenen Parametern des Schneidvorgangs zu Schwierigkeiten bei der Aufrechterhaltung der erforderlichen Schnittiefe des Laserstrahls 4, so vermindert sich gleichzeitig der mit Hilfe der Widerstandsmeßeinrichtung 9 bestimmte elektrische Widerstand gegenüber dem Ausgangszustand erheblich. Diese Widerstandsverminderung bzw. der sich ergebende reduzierte Widerstandswert wird mittels der Auswerteeinrichtung 14 erfaßt.

Gleichzeitig erfaßt die Auswerteeinrichtung 14 den mittels der kapazitiven Abstandsmeßeinrichtung 13 ermittelten Abstand von Laserdüse 2 und Werkstück 5. Ist der Abstand zwischen der Laserdüse 2 und dem Werkstück 5 von Null verschieden, ist also die Laserdüse 2 von dem Werkstück 5 beabstandet und nimmt der mittels der Widerstandsmeßeinrichtung 9 bestimmte elektrische Widerstand des Mediums zwischen der Laserdüse 2 und dem Werkstück 5 einen verhältnismäßig niedrigen Wert an, so indiziert dies für die Auswerteeinrichtung 14 das Vorliegen von Bearbeitungsbedingungen, unter denen mit einer verminderten Schneidqualität zu rechnen ist, da der Laserstrahl 4 das Werkstück 5 nicht mehr bzw. nicht mehr durchgängig entlang der Schnittlinie durchsetzt. Auf der Grundlage der gemessenen Widerstandswerte bzw. der Widerstandswertänderung erzeugt die Auswerteeinrichtung 14 Steuersignale für die Einrichtung 15 zur Steuerung der Parameter des Schneidvorgangs, aufgrund derer die letztgenannte Einrichtung 15 die Relativgeschwindigkeit von Laserschneidkopf 1 und Werkstück 5 und/oder die Leistung des Laserstrahls 4 herabsetzt, bis der über die Widerstandsmeßeinrichtung 9 bestimmte elektrische Widerstand Werte annimmt, die dem bei regulärem Schneidbetrieb gemessenen Wert entsprechen oder diesem Wert zumindest eng benachbart sind.

Auf die beschriebene Art und Weise werden die Parameter des Schneidvorgangs derart eingestellt, daß an der Schneidstelle stets Bearbeitungsverhältnisse herrschen, die einen optimalen Bearbeitungserfolg gewährleisten.

Die Widerstandsmeßeinrichtung läßt sich auch beim Einstechen des Laserstrahls in das zu bearbeitende Werkstück 5 nutzen. So kann der Vorschub des Laserschneidkopfs 1, d.h. dessen Relativbewegung gegenüber dem Werkstück 5, erst einsetzen, wenn der auf das Werkstück 5 zu Beginn der Bearbeitung gerichtete Laserstrahl 4 dieses erstmalig durchdrungen, also das Werkstück 5 "durchstochen" hat. Bis dies der Fall ist, nimmt der elektrische Widerstand des Mediums zwischen der Laserdüse 2 und dem Werkstück 5 verhältnismäßig niedrige Werte an. Die Größe des elektrischen Widerstandes steigt schlagartig an, sobald der Laserstrahl 4 das Werkstück 5 durchdringt. Der beschriebene Anstieg des elektrischen Widerstandes wird mittels der Widerstandsmeßeinrichtung 9 festgestellt und markiert den Zeitpunkt, zu welchem der Vorschub des Laserschneidkopfs 1 gegenüber dem Werkstück 5 in Bearbeitungsrichtung einsetzen kann. Entsprechendes wird von der Maschinensteuerung veranlaßt.

Auf die beschriebene Art und Weise wird die Möglichkeit eröffnet, den Vorschub des Laserschneidkopfs 1 zum frühestmöglichen Zeitpunkt aufzunehmen und dadurch die Werkstückbearbeitung mit minimaler Bearbeitungszeit durchzuführen.

## Patentansprüche

1. Laserschneidmaschine zum Schneiden elektrisch leitender Werkstücke (5) mit einem relativ zu dem zu bearbeitenden Werkstück (5) von diesem beabstandet bewegbaren Laserschneidkopf (1) zumindest mit einem elektrisch leitenden Teil, insbesondere einer elektrisch leitenden Laserdüse (2), mit einer Abstandsmeßeinrichtung (13) zur Bestimmung des Abstandes des Laserschneidkopfs (1), insbesondere der Laserdüse (2), von dem Werkstück (5), mit einer Widerstandsmeßeinrichtung (9), die einerseits mit dem Laserschneidkopf (1) bzw. dessen elektrisch leitendem Teil, insbesondere der Laserdüse (2) des Laserschneidkopfs (1), und andererseits mit dem Werkstück (5) in Verbindung steht und mittels derer die Größe des elektrischen Widerstandes des Mediums zwischen dem Laserschneidkopf (1), vorzugsweise der Laserdüse (2), und dem Werkstück (5) bestimmbar ist sowie mit einer Einrichtung (15) zur Steuerung der Parameter des Schneidvorgangs, mit welcher die Widerstandsmeßeinrichtung (9) über eine mit der Abstandsmeßeinrichtung (13) in Verbindung stehende Auswerteeinrichtung (14) steuernd gekoppelt ist, wobei die Auswerteeinrichtung (14) in Abhängigkeit von der ermittelten Größe des elektrischen Widerstandes sowie dem bestimmten Abstand des Laserschneidkopfs (1), insbesondere der Laserdüse (2), von dem Werkstück (5) ein Steuersignal für die Einrichtung (15) zur Steuerung der Parameter des Schneidvorgangs erzeugt, **dadurch gekennzeichnet, daß** die Auswerteeinrichtung (14) ein Steuersignal für die Einrichtung (15) zur Steuerung der Parameter des Schneidvorgangs im Sinne einer Vergrößerung des ermittelten elektrischen Widerstandes nur unter der Voraussetzung erzeugt, daß der mittels der Abstandsmeßeinrichtung (13) bestimmte Abstand von Null verschieden ist.

2. Verfahren zum Laserschneiden elektrisch leitender Werkstücke (5), wobei ein Laserschneidkopf (1) von dem zu bearbeitenden Werkstück (5) beabstandet relativ zu diesem bewegt wird und die Größe des elektrischen Widerstandes des Mediums zwischen dem Laserschneidkopf (1) und dem Werkstück (5) sowie der zwischen dem Laserschneidkopf (1), insbesondere der Laserdüse (2), und dem Werkstück (5) zum Zeitpunkt der Widerstandsmessung bestehende Abstand gemessen und die Parameter des Schneidvorgangs in Abhängigkeit von den ermittelten Größen des elektrischen Widerstandes sowie des Abstandes gesteuert werden, **dadurch gekennzeichnet, daß** die Parameter des Schneidvorgangs nur unter der Voraussetzung im Sinne einer Vergrößerung der gemessenen Widerstandswerte gesteuert werden, daß der gemessene Abstand zwischen Laserschneidkopf (1) und Werkstück (5) von Null verschieden ist.

3. Verfahren nach Anspruch 2, **dadurch gekennzeichnet, daß** bei der Steuerung der Parameter des Schneidvorgangs Gruppen ermittelter Größen des elektrischen Widerstandes jeweils ein Betrag des betreffenden Parameters zugeordnet wird.

## Claims

1. Laser cutting machine for cutting electrically conductive workpieces (5), having a laser cutting head (1) which can be moved relative to the workpiece (5) to be processed with spacing therefrom and which has at least an electrically conductive component, in particular an electrically conductive laser nozzle (2), and having a spacing measuring device (13) for determining the spacing of the laser cutting head (1), in particular the laser nozzle (2), from the workpiece (5), and having a resistance measuring device (9) which is connected, at one side, to the laser cutting head (1) or the electrically conductive component thereof, in particular the laser nozzle (2) of the laser cutting head (1), and, at the other side, to the workpiece (5), and by means of which the magnitude of the electrical resistance of the medium between the laser cutting head (1), preferably the laser nozzle (2), and the workpiece (5) can be determined, and having a device (15) for controlling the parameters of the cutting operation, to which device (15) the resistance measuring device (9) is coupled in a controlling manner via an evaluation device (14) which is connected to the spacing measuring device (13), the evaluation device (14) generating a control signal for the device (15) for controlling the parameters of the cutting operation in accordance with the established magnitude of the electrical resistance and the determined spacing of the laser cutting head (1), in particular the laser nozzle (2), from the workpiece (5), **characterised in that** the evaluation device (14) generates a control signal for the device (15) for controlling the parameters of the cutting operation so as to increase the established electrical resistance only on condition that the spacing determined by the spacing measuring device (13) is not equal to zero.

2. Method for laser cutting electrically conductive workpieces (5), a laser cutting head (1) being moved relative to the workpiece (5) to be processed with spacing therefrom and the magnitude of the electrical resistance of the medium between the laser cutting head (1) and the workpiece (5) and the spacing provided between the laser cutting head (1), in particular the laser nozzle (2), and the workpiece (5) at the time of the resistance measurement being measured and the parameters of the cutting operation being controlled in accordance with the established magnitudes of the electrical resistance and the spacing, **characterised in that** the parameters of the cutting operation are controlled so as to increase the measured resistance values only on condition that the spacing measured between the laser cutting head (1) and the workpiece (5) is not equal to zero.

3. Method according to claim 2, **characterised in that**, when the parameters of the cutting operation are controlled, a value of the relevant parameter is associated in each case with groups of established magnitudes of the electrical resistance.

## Revendications

1. Machine à couper au laser pour couper des pièces conductrices de l'électricité (5), avec une tête de coupe au laser (1) mobile par rapport à la pièce à usiner (5), distante de cette dernière, présentant au moins une partie conductrice de l'électricité, en particulier une buse à laser conductrice de l'électricité (2), avec un dispositif de mesure de distance (13) pour la détermination de la distance de la tête de coupe au laser (1), en particulier de la buse à laser (2), par rapport à la pièce (5), avec un dispositif de mesure de résistance (9) qui est relié d'une part à la tête de coupe au laser (1), plus exactement à sa partie conductrice de l'électricité, en particulier à la buse à laser (2) de la tête de coupe au laser (1), et d'autre part à la pièce (5), et au moyen duquel la valeur de la résistance électrique du milieu entre la tête de coupe au laser (1), de préférence la buse à laser (2), et la pièce (5) peut être déterminée, ainsi qu'avec un dispositif (15) de commande des paramètres de l'opération de coupe avec lequel le dispositif de mesure de résistance (9) est couplé de manière à le commander par l'intermédiaire d'un dispositif d'évaluation (14) relié au dispositif de mesure de distance (13), le dispositif d'évaluation (14) générant un signal de commande pour le dispositif (15) de commande des paramètres de l'opération de coupe en fonction de la valeur de la résistance électrique déterminée ainsi que de la distance déterminée de la tête de coupe au laser (1), en particulier de la buse à laser (2), par rapport à la pièce (5), **caractérisée par le fait que** le dispositif d'évaluation (14) ne génère un signal de commande pour le dispositif (15) de commande des paramètres de l'opération de coupe dans le sens d'une augmentation de la résistance électrique déterminée qu'à la condition que la distance déterminée au moyen du dispositif de mesure de distance (13) soit différente de zéro.

2. Procédé de coupe au laser de pièces conductrices de l'électricité (5) dans lequel on déplace une tête de coupe au laser (1), distante de la pièce à usiner (5), par rapport à cette dernière et on mesure la valeur de la résistance électrique du milieu entre la tête de coupe au laser (1) et la pièce (5) ainsi que la distance existant entre la tête de coupe au laser (1), en particulier la buse à laser (2), et la pièce (5) au moment de la mesure de résistance et on commande les paramètres de l'opération de coupe en fonction des valeurs de résistance électrique ainsi que de distance déterminées, **caractérisé par le fait que** les paramètres de l'opération de coupe ne sont commandés dans le sens d'une augmentation de la résistance électrique déterminée qu'à la condition que la distance mesurée entre la tête de coupe au laser (1) et la pièce (5) soit différente de zéro.

3. Procédé selon la revendication 2, **caractérisé par le fait que** pour de la commande des paramètres de l'opération de coupe, on affecte une valeur du paramètre concerné à des groupes de valeurs de résistance électrique déterminées.
